# EUROPEAN PATENT SPECIFICATION

(11) **EP 0 680 373 B1**
(45) Date of publication and mention of the grant of the patent: **23.10.1996**
(21) Application number: 94905296.3
(22) Date of filing: 19.01.1994
(51) Int. Cl.: B01D 53/34

(54) **METHOD AND APPARATUS FOR CLEANING GASES CONTAINING SULPHUR DIOXIDE**
METHODE UND VORRICHTUNG ZUR REINIGUNG VON SCHWEFELDIOXYD ENTHALTENDEN GASEN
PROCEDE ET APPAREIL D'EPURATION DES GAZ CONTENANT DU DIOXYDE DE SOUFRE

(30) Priority: 21.01.1993 SE 9300168
(43) Date of publication of application: 08.11.1995
(73) Proprietor: ABB FLÄKT AB, S-120 86 Stockholm (SE)
(72) Inventor: RAGNARSSON, Sven, S-360 44 Ingelstad (SE)
(74) Representative: Wiklund, Erik
(86) International application number: SE9400033
(87) International publication number: WO9416797

(56) References cited:
- EP-A- 0 253 951
- US-A- 3 873 532

## Description

This invention relates to a method and an apparatus for cleaning gases containing sulphur dioxide, such as flue gases.

Sulphur dioxide is a gas generated in the oxidation of sulphur-containing materials, such as refuse, coal, oil, natural gas and peat. Although the invention is especially concerned with the removal of sulphur dioxide from flue gases produced by the oxidation (incineration) of such materials, it is not restricted to this particular application, but generally relates to the cleaning of sulphur-dioxide-containing gases. Prior-art cleaning of sulphur-dioxide-containing flue gases is generally based on the absorption of sulphur dioxide by an aqueous alkaline washing liquid. At present, three different systems are predominantly used, namely calcium-based systems, sodium-based systems, and indirect calcium-based systems. In calcium-based systems, limestone (CaCO₃) and lime (CaO, Ca(OH)₂) are used as alkali, whereas in sodium-based systems, sodium hydroxide (NaOH) or soda (Na₂CO₃) is used as alkali. In indirect calcium-based systems, a readily-soluble alkali, such as NaOH, is used primarily for absorbing the sulphur dioxide in a gas scrubber. When having absorbed sulphur dioxide, the washing liquid is regenerated outside the gas scrubber with the aid of a more sparingly-soluble alkali, such as lime. As a result of using a readily-soluble alkali, such as NaOH, in the gas scrubber, a much larger quantity of alkali is dissolved in the washing liquid in the gas scrubber and the risk of deposits is much lower than in a calcium-based system. Since a larger quantity of alkali is dissolved in the washing liquid, the recycled flow of washing liquid in the gas scrubber will be reduced and the capacity of the washing liquid to absorb sulphur dioxide will be improved.

In the present invention, an indirect calcium-based system is used for absorbing sulphur dioxide.

As an instance of the prior art, mention may be made of US-A-3,873,532, which describes a method for wet cleaning of sulphur-dioxide-containing flue gases. According to the US specification, the sulphur-dioxide-containing flue gases are conducted to a gas scrubber, where they are washed with an aqueous alkaline washing liquid based on sodium hydroxide or sodium carbonate. The alkaline washing liquid is circulated by means of a pump from a tank to the gas scrubber, and from the gas scrubber back to the tank. A partial flow of washing liquid is drawn off from the gas scrubber to be regenerated, and is conducted to a vessel for the addition of calcium ions in the form of slaked lime (Ca(OH)₂). Then, the partial flow of washing liquid is fed to a sedimentation installation for the sedimentation of precipitated calcium sulphate, which is then removed and filtered off. Some of the calcium sulphate drawn off from the sedimentation installation is recycled to the vessel for the addition of slaked lime. The washing liquid thus freed of precipitated calcium sulphate is conducted from the sedimentation installation to a device for the addition of soda (Na₂CO₃) and the sedimentation of precipitated calcium carbonate. Then, the precipitated calcium carbonate is recycled to the vessel for the addition of slaked lime, while the regenerated washing liquid is recycled to the tank for alkaline washing liquid.

The indirect calcium-based system described in US-A-3,873,532 suffers from certain drawbacks.

Thus, the sludge that is sedimented after the addition of lime is very fine-grained and has a crystal size of but about 10-50 µm. The sludge chiefly consists of calcium sulphate crystals, but it also contains some impurities, such as carbonates and hydroxides, which are mixed with the calcium sulphate crystals. This means that the sedimented sludge that is recovered and filtered consists not of pure gypsum but of impure gypsum. Such impure gypsum is of no use in industry, but has to be deposited at a high cost. According to the US specification, some of the sedimented sludge is recycled to the vessel for the addition of lime in order to increase the crystal size, but it is merely a fraction of the sludge that is thus recycled, the main part being removed directly for filtering. Furthermore, the recycling to the vessel for the addition of lime, which operates at an alkaline pH, means that the contaminating carbonates and hydroxides in the sludge are not dissolved at all or but to a limited extent.

It may be added that, according to the prior art, polyelectrolyte is often added to the precipitated sludge to make it easier to handle and filter. Naturally, this increases the process costs.

It is an object of this invention to obviate the above-mentioned drawbacks of the prior art and provide an improved method for cleaning sulphur-dioxide-containing gases, such as flue gases, resulting in the production of pure gypsum. According to the invention, this object is attained by the fact that the sludge precipitated upon the addition of lime is, in its entirety, recycled to the partial flow of washing liquid drawn off from the gas scrubber, and is admixed therewith at a site upstream from, i.e. before, the addition of lime.

The invention thus provides a method for cleaning gases containing sulphur dioxide, such as flue gases, wherein the gases are treated in a gas scrubber for the absorption of sulphur dioxide by an aqueous washing liquid which contains readily-soluble alkali and from which a partial flow is drawn off to be regenerated by the addition of calcium ions for the precipitation and removal of calcium sulphate, said method being characterised by recycling the precipitated calcium sulphate in its entirety and admixing it with the partial flow before the addition of calcium ions.

The invention further provides an apparatus for cleaning gases containing sulphur dioxide, such as flue gases, comprising a gas scrubber having means for circulating washing liquid, a conduit for drawing off a partial flow of washing liquid, a vessel for the addition of calcium ions, a vessel for the sedimentation of precipitated calcium sulphate, a vessel for the addition of carbonate ions, a vessel for the sedimentation of calcium carbonate, a conduit for recycling regenerated washing liquid to the gas scrubber, and a conduit for recycling precipitated calcium carbonate upstream from the vessel for the sedimentation of calcium sulphate, said apparatus being characterised by a conduit provided for recycling precipitated calcium sulphate and opening into a vessel arranged upstream from the vessel for the addition of calcium ions.

Further distinctive features and advantages of the invention will appear from the following description and the appended claims.

By recycling the calcium-sulphate-containing sludge in its entirety and admixing it with the partial flow of washing liquid before the addition of calcium ions, in accordance with the invention, the impurities (e.g. carbonates) accompanying the gypsum crystals in the sludge are washed away more effectively, since the washing liquid has a lower pH value upstream from the addition of calcium ions (a pH of about 4-8, preferably about 7, as compared with a pH of about 11.5-13.5, preferably about 13). Apart from the washing effect thus obtained, the recycling of the sludge to a site upstream from the addition of calcium ions has the effect of promoting crystal growth, such that the small gypsum crystals obtained in the initial precipitation may grow into large and pure gypsum crystals which are easily sedimented and filtered. The inventive method has yielded crystals having an average size of about 100-300 µm, to be compared with a size of about 10-50 µm obtained in prior-art methods. The large and pure gypsum crystals obtained by recycling the sludge are not fed further on in the system, but are removed directly from the partial flow to be dewatered, e.g. by filtering. Conveniently, the sludge is recycled to a special vessel arranged upstream from, i.e. before, the vessel for the addition of calcium ions. While washed and in the process of growth, the gypsum crystals sediment in the vessel and are removed from the bottom thereof for dewatering and the recovery of pure gypsum. The large and pure gypsum crystals obtained in the invention are very easy to filter, which means that no expensive polyelectrolyte has to be added and that use can be made of simpler and less expensive equipment for filtering the gypsum crystals. The invention further has the considerable advantage of yielding high-quality gypsum suited for industrial use, thus doing away with the high costs previously incurred for depositing the impure gypsum sludge.

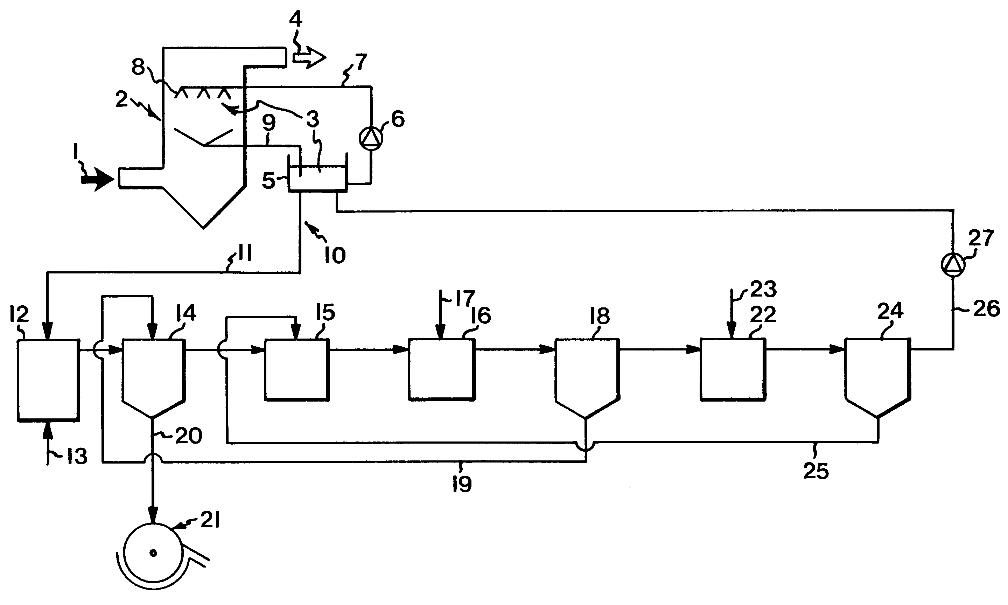

In order to further elucidate the invention, a non-restricting embodiment will now be described with reference to the accompanying drawing, showing a flow chart illustrating the method and the apparatus according to the invention.

As appears from the Figure, sulphur-dioxide-containing gas 1, such as flue gas generated in refuse incineration, is fed to a gas scrubber 2, where it is contacted with an aqueous washing liquid 3 containing a readily-soluble alkali. The sulphur dioxide in the gas is absorbed by the washing liquid, and the cleaned gas 4 then leaves the gas scrubber.

Initially, i.e. before the absorption of sulphur dioxide, the washing liquid 3 consists of an aqueous solution of a readily-soluble alkali, such as a readily-soluble alkali metal compound; a readily-soluble alkaline-earth metal compound, e.g. a magnesium compound; NH₃; or an ammonium compound. The readily-soluble alkali used preferably is a readily-soluble alkali metal compound, such as a readily-soluble sodium or potassium compound, sodium hydroxide (NaOH) being most preferred. By means of a pump 6, the washing liquid 3 is pumped from a supply 5 through a conduit 7 to the gas scrubber 2, where it is finely distributed by nozzles 8. After the absorption of sulphur dioxide, the washing liquid is collected and recycled to the supply 5 via a conduit 9. The circuit described above constitutes the primary circuit for circulating the washing liquid in the gas scrubber. As the washing liquid circulates in the gas scrubber, it absorbs more sulphur dioxide. In order to maintain the absorption capacity of the washing liquid and avoid any inconvenient precipitations, the washing liquid is regenerated in a secondary circuit, which will be described in the following.

In the secondary circuit, the washing liquid is regenerated by precipitating the absorbed sulphur dioxide with the aid of calcium ions, such as calcium sulphite or calcium sulphate, preferably calcium sulphate. To this end, a partial flow 10 is drawn off from the supply 5 and conducted to a regeneration plant via a conduit 11. If present in the form of sulphite, the absorbed sulphur dioxide should first be oxidised to sulphate. For this purpose, the regeneration plant may include an oxidation tower 12, into which is blown an oxygen-containing gas 13, e.g. air, in order to oxidise the sulphite to sulphate. It is to be understood that the oxidation tower is an optional, albeit preferred, component according to the invention.

From the oxidation tower, the partial flow of washing liquid is conducted on to a vessel 14 for the recycling and sedimentation of gypsum sludge, as will be described in more detail below.

Then, the partial flow of washing liquid is conducted to a vessel 15 for recycled carbonate sludge obtained upon the addition of soda to the washing liquid. Although preferred, the separate vessel 15 is optional, and carbonate-containing sludge may, according to the invention, alternatively be recycled to the vessel 16 for the addition of calcium ions 17 to the partial flow of washing liquid. The calcium ions may be added in any suitable form, such as limestone (CaCO₃) or lime, which here is meant to encompass burnt lime (CaO) as well as slaked lime (Ca(OH)₂). Preferably, the calcium ions are added in the form of slaked lime. By the addition of calcium ions, sparingly-soluble calcium compounds, chiefly calcium sulphate (gypsum), are precipitated in the form of fine crystals in the washing liquid.

Thereafter, the washing liquid is conducted on to a sedimentation vessel 18 for the sedimentation of the precipitated material. This material sediments and accumulates as sludge at the bottom of the vessel 18, whence it is removed through a conduit 19 and recycled to the vessel 14 in the secondary circuit, where it is mixed with the partial flow 10 of washing liquid. By recycling and admixing the calcium-sulphate-containing sludge with the washing liquid early on in the secondary circuit, namely upstream from, i.e. before, the addition of calcium ions, at a stage when the liquid still has a low pH value, the impurities (e.g. carbonates) accompanying the sludge and contaminating the calcium sulphate crystals are dissolved, such that the calcium sulphate crystals are rid of impurities and thus are purified. Unlike the impure crystals, which are white and of irregular shape, the purified crystals are clear, which is a distinct indication of high purity. By recycling the sludge, the calcium sulphate crystals are given the opportunity to grow, and crystals having a size of about 100-300 µm have been obtained in the invention. The large calcium sulphate crystals sediment easily and rapidly (roughly like sand) in the vessel 14, and accumulate at the bottom of the vessel to be discharged through a conduit 20 and transferred to a dewatering device 21. As indicated in the Figure, the dewatering device suitably is a filter, such as a rotating vacuum filter. However, also other types of dewatering devices, such as band filters or centrifuges, may be used. Dewatering is considerably simplified by the fact that the calcium sulphate crystals obtained in the invention are large and pure, enabling the use of simpler and less expensive dewatering equipment.

Should one wish to further prolong the residence time of the calcium sulphate crystals in the vessel 14, the crystals may be recycled from the conduit 20 via a return conduit (not shown) to the vessel 14.

The washing liquid thus rid of sedimented calcium sulphate sludge is conducted from the sedimentation vessel 18 further on in the secondary circuit to a vessel 22 for the addition of carbonate ions 23. Carbonate ions are added in order to precipitate calcium ions in the washing liquid in the form of sparingly-soluble calcium carbonate. The carbonate ions are added in the form of soda (Na₂CO₃), so that readily-soluble alkali is simultaneously supplied to the washing liquid.

From the vessel 22, the partial flow of washing liquid is conducted on to a sedimentation vessel 24, where the precipitated carbonate sediments and accumulates as sludge at the bottom. Thence, the sludge is recycled via a conduit 25 to the vessel 15 in the secondary circuit, where it is mixed with the incoming partial flow of washing liquid. As mentioned in the foregoing, the vessel 15 is an optional component. If the vessel 15 is dispensed with, the carbonate sludge is instead recycled to the vessel 16 for the addition of calcium ions.

When the partial flow of washing liquid has been thus regenerated in the secondary circuit, it is recycled via a conduit 26 to the supply 5 of washing liquid. A pump 27, suitably disposed in the conduit 26, is arranged for circulating the partial flow of washing liquid drawn off to the secondary circuit.

The present invention differs from prior-art indirect calcium-based systems in having a special vessel 14 for recycling calcium sulphate sludge in the secondary circuit. The additional cost thus incurred is amply offset by the advantages involved, namely that pure gypsum suited for industrial use is recovered, and that simpler and less expensive dewatering equipment can be used owing to the resulting gypsum crystals being easily filtered.

## Claims

1. A method for cleaning gases containing sulphur dioxide, such as flue gases, wherein the gases are treated in a gas scrubber (2) for the absorption of sulphur dioxide by an aqueous washing liquid (3) which contains readily-soluble alkali and from which a partial flow (10) is drawn off to be regenerated by the addition of calcium ions (17) for the precipitation and removal of calcium sulphate, **characterised** by recycling (19) the precipitated calcium sulphate in its entirety and admixing it (14) with the partial flow before the addition of calcium ions.

2. A method as set forth in claim 1, **characterised** by removing sludge from the partial flow of washing liquid for dewatering (21) after the admixture (14) of recycled calcium sulphate but before the addition of calcium ions (17).

3. A method as set forth in claim 1 or 2, **characterised** by recycling calcium sulphate to a vessel (14), from the bottom of which sludge is removed for dewatering (21).

4. A method as set forth in any one of the preceding claims, **characterised** by the washing liquid (3) containing readily-soluble alkali in the form of readily-soluble alkali metal compounds, readily-soluble alkaline-earth metal compounds, such as magnesium compounds, NH₃ or ammonium compounds, preferably sodium compounds, such as NaOH, and by the calcium ions (17) being added in the form of CaO and/or Ca(OH)₂.

5. A method as set forth in any one of the preceding claims, **characterised** by oxidising (12) the partial flow (10) of washing liquid from the gas scrubber before admixing recycled calcium sulphate.

6. A method as set forth in any one of the preceding claims, **characterised** by adding, after the removal of calcium sulphate, carbonate ions (23) to the partial flow (10) of washing liquid for the precipitation and removal of calcium ions, and then recycling the partial flow of washing liquid to the gas scrubber (2).

7. A method as set forth in claim 6, **characterised** by recycling (25), after the addition of carbonate ions (23), the precipitate formed, and admixing it with the partial flow of washing liquid when adding calcium ions (17).

8. A method as set forth in claim 6 or 7, **characterised** by adding the carbonate ions in the form of soda (Na₂CO₃).

9. An apparatus for cleaning gases containing sulphur dioxide, such as flue gases, comprising a gas scrubber (2) having means (5, 6, 7, 9) for circulating washing liquid (3), a conduit (11) for drawing off a partial flow (10) of washing liquid, a vessel (16) for the addition of calcium ions (17), a vessel (18) for the sedimentation of precipitated calcium sulphate, a vessel (22) for the addition of carbonate ions, a vessel (24) for the sedimentation of calcium carbonate, a conduit (26) for recycling regenerated washing liquid to the gas scrubber (2), and a conduit (25) for recycling precipitated calcium carbonate upstream from the vessel (18) for the sedimentation of calcium sulphate, **characterised** by a conduit (19) provided for recycling precipitated calcium sulphate and opening into a vessel (14) arranged upstream from the vessel (16) for the addition of calcium ions.

10. An apparatus as set forth in claim 9, **characterised** in that the conduit (25) for recycling precipitated calcium carbonate opens into a vessel (15) arranged between the vessel (14) for recycled calcium sulphate and the vessel (16) for the addition of calcium ions.

## Patentansprüche

1. Verfahren zum Reinigen von Schwefeldioxid enthaltenden Gasen, beispielsweise Rauchgasen, wobei die Gase in einem Gaswascher (2) behandelt werden, und zwar zur Absorption von Schwefeldioxid durch eine wässrige Waschflüssigkeit (3), welche leichtlösliches Alkali enthält und von welcher eine Teilströmung (10) abgenommen wird, um regeneriert zu werden, und zwar durch Zugabe von Kalziumionen (17) zum Absetzen und Entfernen von Kalziumsulfat, dadurch **gekennzeichnet,** dass das abgesetzte Kalziumsulfat in seiner Gesamtheit zurückgeführt (19) und vor der Zugabe von Kalziumionen der Teilströmung beigemischt (14) wird.

2. Verfahren nach Anspruch 1, dadurch **gekennzeichnet,** dass Schlamm aus der Teilströmung von Waschflüssigkeit zur Entwässerung (21) entfernt wird, und zwar nach der Beimischung (14) von zurückgeführtem Kalziumsulfat, jedoch vor der Zugabe von Kalziumionen (17).

3. Verfahren nach Anspruch 1 oder 2, dadurch **gekennzeichnet,** dass Kalziumsulfat einem Gefäss (14) zurückgeführt wird, aus dessen unterem Teil Schlamm zum Entwässern (21) entfernt wird.

4. Verfahren nach einem der vorhergehenden Ansprüche, dadurch **gekennzeichnet,** dass die Waschflüssigkeit (3) leichtlösliches Alkali in Form von leichtlöslichen Alkalimetallverbindungen, leichtlöslichen Erdalkalimetallverbindungen, beispielsweise Magnesiumverbindungen, NH₃ oder Ammoniumverbindungen, vorzugsweise Natriumverbindungen, beispielsweise NaOH, enthält, und dass die Kalziumionen (17) in Form von CaO und/oder Ca(OH)₂ zugegeben werden.

5. Verfahren nach einem der vorhergehenden Ansprüche, dadurch **gekennzeichnet,** dass die Teilströmung (10) von Waschflüssigkeit aus dem Gaswascher vor der Beimischung von zurückgeführtem Kalziumsulfat oxidiert wird.

6. Verfahren nach einem der vorhergehenden Ansprüche, dadurch **gekennzeichnet,** dass nach dem Entfernen von Kalziumsulfat Karbonationen (23) der Teilströmung (10) von Waschflüssigkeit zum Absetzen und Entfernen von Kalziumionen zugegeben werden, und danach die Teilströmung von Waschflüssigkeit dem Gaswascher (2) zurückgeführt wird.

7. Verfahren nach Anspruch 6, dadurch **gekennzeichnet,** dass nach der Zugabe von Karbonationen (23) der gebildete Niederschlag zurückgeführt (25) und beim Zugeben von Kalziumionen (17) der Teilströmung von Waschflüssigkeit beigemischt wird.

8. Verfahren nach Anspruch 6 oder 7, dadurch **gekennzeichnet,** dass die Karbonationen in Form von Soda (Na₂CO₃) zugegeben werden.

9. Vorrichtung zum Reinigen von Schwefeldioxid enthaltenden Gasen, beispielsweise Rauchgasen, umfassend einen Gaswascher (2) mit Mitteln (5, 6, 7, 9) zum Umwälzen von Waschflüssigkeit (3), eine Leitung (11) zum Abnehmen einer Teilströmung (10) von Waschflüssigkeit, ein Gefäss (16) zum Zugeben von Kalziumionen (17), ein Gefäss (18) zum Sedimentieren von abgesetztem Kalziumsulfat, ein Gefäss (22) zum Zugeben von Karbonationen, ein Gefäss (24) zum Sedimentieren von Kalziumkarbonat, eine Leitung (26) zum Zurückführen von regenerierter Waschflüssigkeit zum Gaswascher (2), und eine Leitung (25) zum Zurückführen von abgesetztem Kalziumkarbonat stromaufwärts des Gefässes (18) zum Sedimentieren von Kalziumsulfat, **gekennzeichnet** durch eine Leitung (19) zum Zurückführen von abgesetztem Kalziumsulfat, welche in ein Gefäss (14) mündet, das stromaufwärts des Gefässes (16) zum Zugeben von Kalziumionen angeordnet ist.

10. Vorrichtung nach Anspruch 9, dadurch **gekennzeichnet,** dass die Leitung (25) zum Zurückführen von abgesetztem Kalziumkarbonat in ein Gefäss (15) mündet, das zwischen dem Gefäss (14) für zurückgeführtes Kalziumsulfat und dem Gefäss (16) zum Zugeben von Kalziumionen angeordnet ist.

## Revendications

1. Procédé d'épuration des gaz contenant du dioxyde de soufre, tel que les gaz de la combustion, dans lequel les gaz sont traités dans un laveur de gaz (2) en vue de l'absorption du dioxyde de soufre par un liquide laveur aqueux (3) qui contient de l'alcali facilement soluble et à partir duquel est retiré un écoulement partiel (10) afin d'être régénéré par l'addition d'ions de calcium (17) en vue de la précipitation et l'enlèvement du sulfate de calcium, **caractérisé** par les étapes consistant à recycler (19) en son entier le sulfate de calcium précipité et le mélanger (14) à l'écoulement partiel avant que les ions de calcium ne soient ajoutés.

2. Procédé selon la revendication 1, **caractérisé** par l'étape consistant à enlever des boues de l'écoulement partiel de liquide laveur en vue de l'égouttage (21) après que le sulfate de calcium recyclé y a été mélangé (14) mais avant que les ions de calcium (17) ne soient ajoutés.

3. Procédé selon la revendication 1 ou 2, **caractérisé** par l'étape consistant à recycler le sulfate de calcium à un récipient (14), à partir le fond duquel des bornes sont enlevées en vue de l'égouttage (21).

4. Procédé selon l'une quelconque des revendications précédentes, **caractérisé** par le fait que le liquide laveur (3) contient de l'alcali facilement soluble sous forme de composés de métaux alcalins facilement solubles, composés de métaux alcalino-terreux facilement solubles, tel que des composés de magnésium, NH₃ ou composés d'ammonium, de préférence des composés de sodium, tel que NaOH, et par le fait que les ions de calcium (17) sont ajoutés sous forme de CaO et/ou Ca(OH)₂.

5. Procédé selon l'une quelconque des revendications précédentes, **caractérisé** par l'étape consistant à oxyder (12) l'écoulement partiel (10) de liquide laveur venant du laveur de gaz avant d'y mélanger le sulfate de calcium recyclé.

6. Procédé selon l'une quelconque des revendications précédentes, **caractérisé** par les étapes consistant à ajouter, après l'enlèvement de sulfate de calcium, des ions de carbonate (23) à l'écoulement partiel (10) de liquide laveur en vue de la précipitation et l'enlèvement d'ions de calcium, et puis recycler l'écoulement partiel de liquide laveur au laveur de gaz (2).

7. Procédé selon la revendication 6, **caractérisé** par les étapes consistant à recycler (25), après l'addition d'ions de carbonate (23), le précipité formé, et le mélanger à l'écoulement partiel de liquide laveur lors de l'addition d'ions de calcium (17).

8. Procédé selon la revendication 6 ou 7, **caractérisé** par l'étape consistant à ajouter les ions de carbonate sous forme de soude (Na₂CO₃).

9. Appareil d'épuration des gaz contenant du dioxyde de soufre, tel que les gaz de la combustion, comprenant un laveur de gaz (2) ayant des moyens (5, 6, 7, 9) conçus pour faire circuler un liquide laveur (3), un conduit (11) destiné à retirer un écoulement partiel (10) du liquide laveur, un récipient (16) destiné à l'addition d'ions de calcium (17), un récipient (18) destiné à la sédimentation du sulfate de calcium précipité, un récipient (22) destiné à l'addition d'ions de carbonate, un récipient (24) destiné à la sédimentation du carbonate de calcium, un conduit (26) destiné au recyclage du liquide laveur régénéré au laveur de gaz (2), et un conduit (25) destiné au recyclage du carbonate de calcium précipité en amont du récipient (18) destiné à la sédimentation du sulfate de calcium, **caractérisé** par un conduit (19) qui est destiné au recyclage du sulfate de calcium précipité et qui aboutit dans un récipient (14) prévu en amont du récipient (16) qui est destiné à l'addition d'ions de calcium.

10. Appareil selon la revendication 9, **caractérisé** par le fait que le conduit (25) destiné au recyclage du carbonate de calcium précipité aboutit dans un récipient (15) prévu entre le récipient (14) pour le sulfate de calcium recyclé et le récipient (16) pour l'addition d'ions de calcium.
